(19) Europäisches Patentamt / European Patent Office / Office européen des brevets

(11) **EP 2 085 891 A1**

(12) **DEMANDE DE BREVET EUROPEEN**

(43) Date de publication:
**05.08.2009 Bulletin 2009/32**

(51) Int Cl.:
*G06F 13/42* *(2006.01)*   *G06F 15/173* *(2006.01)*
*H04L 12/56* *(2006.01)*

(21) Numéro de dépôt: **09151757.3**

(22) Date de dépôt: **30.01.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **30.01.2008 FR 0850579**

(71) Demandeur: **STMicroelectronics SA**
**92120 Montrouge (FR)**

(72) Inventeur: **Salemi, Ennio**
**38100, GRENOBLE (FR)**

(74) Mandataire: **Delprat, Olivier**
**Bureau D.A. Casalonga-Josse**
**Bayerstraße 71/73**
**80335 München (DE)**

(54) **Procédé de transfert de données et dispositif correspondant**

(57) L'invention se rapporte à un procédé de transfert de données entre un premier (EM1, EM2) et un deuxième (RC3, RC4) ensemble d'éléments par l'intermédiaire de moyens de commutation (SW) comprenant un ensemble de trajets associés chacun à un coefficient de pondération représentant un flux de données pour chaque trajet, le procédé comprenant un contrôle de flux par crédit entre le premier ensemble d'éléments et les moyens de commutation et un contrôle de flux par crédit entre les moyens de commutation et le deuxième ensemble d'éléments,

On élabore un coefficient de crédit disponible pour chaque élément du premier ensemble à partir d'un crédit alloué par chaque élément du deuxième ensemble et du coefficient de pondération de chaque trajet.

FIG.1

EP 2 085 891 A1

**Description**

L'invention concerne, de manière générale, la transmission de mots d'information binaires entre deux composants incorporés au sein d'un même système, par exemple entre deux circuits intégrés ou puces, (« chip » en langue anglaise) réalisés sur la carte imprimée d'un téléphone portable. Ces deux circuits intégrés peuvent être des processeurs dédiés chacun à une application particulière.

Les différents circuits intégrés (deux ou plus) sont connectés via des bus de transmission sur lesquels sont disposés des commutateurs (« switch » en langue anglaise).

Ces commutateurs ont pour fonction de répartir les données envoyées par un premier groupe de circuits intégrés (émetteurs) vers un deuxième groupe de circuits intégrés (récepteurs). Plus précisément, les commutateurs comportent une série d'entrées reliées aux émetteurs et une série de sorties reliées aux récepteurs. Autrement dit, les entrées du commutateur jouent le rôle de récepteurs vis-à-vis des circuits intégrés émetteurs, et les sorties du commutateur jouent le rôle d'émetteurs vis-à-vis des circuits intégrés récepteurs.

Une technique classiquement utilisée pour le transfert de données est celle du contrôle par crédit. De façon simplifiée, les récepteurs envoient aux émetteurs un certain nombre de crédits (correspondant à une certaine quantité de données) qu'ils sont autorisés à leur transmettre. A la réception de ces crédits, les émetteurs peuvent transmettre des données vers les récepteurs jusqu'à l'épuisement des crédits reçus.

Outre le transfert des données par contrôle de crédit, il est nécessaire de tenir compte de la nature des données véhiculées.

En effet, chaque entrée du commutateur reçoit de l'émetteur auquel elle est connectée, différents types de données (audio, vidéo,...), qui sont réparties par le commutateur vers les sorties adéquates. Par exemple, toutes les données audio reçues en entrée sont transmises vers la première sortie qui les transfère vers le récepteur correspondant, apte à traiter les données de type audio.

Selon un mode de mise en oeuvre, il est proposé un procédé et un dispositif de transfert de données permettant un transfert des données d'un premier ensemble d'éléments vers un deuxième ensemble d'éléments de façon optimale, sans perte de données et sans congestion de données.

Selon un premier aspect, il est proposé un procédé de transfert de données entre un premier et un deuxième ensemble d'éléments par l'intermédiaire de moyens de commutation comprenant un ensemble de trajets associés chacun à un coefficient de pondération représentant un flux de données pour chaque trajet, le procédé comprenant un contrôle de flux par crédit entre le premier ensemble d'éléments et les moyens de commutation et un contrôle de flux par crédit entre les moyens de commutation et le deuxième ensemble d'éléments.

Selon une caractéristique générale de ce procédé, on élabore un coefficient de crédit disponible pour chaque élément du premier ensemble à partir d'un crédit alloué par chaque élément du deuxième ensemble et du coefficient de pondération de chaque trajet.

Le transfert des données est alors effectué à partir de chaque coefficient de crédit disponible.

En particulier, pour ce faire, on calcule en outre une valeur de crédit pour chaque élément du premier ensemble, indiquant la quantité de données que les moyens de commutation sont autorisés à recevoir du premier élément, ladite valeur de crédit étant calculée à partir du coefficient de crédit élaboré et d'une valeur représentative d'une quantité d'espace mémoire disponible dans les moyens de commutation pour recevoir des données en provenance de chaque élément du premier ensemble d'élément.

En d'autres termes, chaque chemin que les données peuvent emprunter lors du transfert des données (par exemple à l'aide d'un commutateur) est caractérisé par un coefficient de pondération. Ce coefficient représente par exemple la probabilité que des données envoyées sur une certaine entrée soient envoyées vers une certaine sortie.

C'est en fonction de ce coefficient de pondération, ainsi que du crédit alloué par les éléments du deuxième ensemble, qu'est calculée la valeur de crédit. Cet aspect a pour avantage, du fait d'une répartition optimale, de pouvoir transférer les données entre les éléments du premier ensemble et du deuxième ensemble, à flux tendu.

Selon un mode de mise en oeuvre, la valeur de crédit est calculée en calculant la valeur minimale entre le coefficient de crédit et ladite valeur représentative de l'espace mémoire disponible.

Par exemple, on transmet la valeur de crédit calculée à chaque élément du premier ensemble, le transfert des données entre chaque élément du premier ensemble et les moyens de commutation étant effectué en fonction de la valeur de crédit calculée.

En outre, on peut transmettre les données dans les trajets des moyens de commutation en fonction de la nature des données.

Selon un autre aspect, il est proposé un dispositif de transfert de données entre un premier et un deuxième ensemble d'éléments comprenant des moyens de commutation comprenant un ensemble de trajets associés chacun à un coefficient de pondération représentant un flux de données pour chaque trajet et comportant des entrées et des sorties, respectivement associées à des éléments du premier et du deuxième ensemble.

Les moyens de commutation comprennent en outre des moyens pour calculer un coefficient de crédit disponible pour chaque élément du premier ensemble à partir d'un crédit alloué par chaque élément du deuxième ensemble et du coefficient de pondération de chaque trajet et pour transmettre les données à partir de la valeur du coefficient de crédit calculé.

Il peut en outre comprendre des moyens pour calculer une valeur de crédit pour chaque élément du premier ensemble, indiquant la quantité de données que les moyens de commutation sont autorisés à recevoir du premier élément, ladite valeur de crédit étant calculée à partir du coefficient de crédit élaboré et d'une valeur représentative d'une quantité d'espace mémoire disponible dans les moyens de commutation pour recevoir des données en provenance de chaque élément du premier ensemble d'élément.

Selon une autre caractéristique de ce dispositif, celui-ci comprend en outre des moyens de calcul aptes à calculer la valeur de crédit à partir de la valeur minimale entre le coefficient de crédit et ladite valeur représentative de l'espace mémoire disponible.

Ledit coefficient de crédit pour une entrée numérotée i, i étant un entier, peut s'écrire :

$$OP_i(t) = \sum_{j=1}^{n} \gamma_{ij}(t) \Delta_j(t)$$

avec $\gamma_{ij}(t)=1/\alpha_{ij}(t)$ si $\alpha_{ij}(t) \neq 0$ ou $\gamma_{ij}(t)=0$ sinon, $\alpha_{ij}(t)$ étant le coefficient de ponctuation pour le couple entrée/sortie respectivement numérotées i et j, j étant un entier compris entre 1 et n, et où :

- n est le nombre de sorties du moyen de répartition, et
- $\Delta_j(t)$ est la quantité de données qu'il est possible de transférer depuis la sortie numérotée j.

Selon un autre aspect, il est encore proposé un système de télécommunication, par exemple un téléphone portable, incorporant un dispositif tel que défini ci-dessus.

D'autres avantages et caractéristiques apparaîtront à l'examen de la description détaillée de modes de mise en oeuvre et de réalisation, nullement limitatifs, et des dessins annexés sur lesquels :

- la figure 1 représente schématiquement un mode de réalisation d'un dispositif de transfert de données entre un premier et un deuxième ensemble d'éléments ;
- la figure 2 représente un autre mode de réalisation d'un dispositif de transfert de données entre un premier et un deuxième élément ;
- les figures 3A à 3E représentent une technique de contrôle des données basée sur la technique de contrôle par crédit ;
- les figures 4 et 5 représentent des moyens de mémorisation respectivement associés aux entrées et aux sorties d'un moyen de répartition ;
- la figure 6 illustre un mode de réalisation d'un moyen de répartition ainsi que les différents chemins possibles et les coefficients de flux qui leur sont associés ; et
- la figure 7 illustre un mode de mise en oeuvre d'un procédé de transfert de données entre un premier et un deuxième ensemble d'éléments.

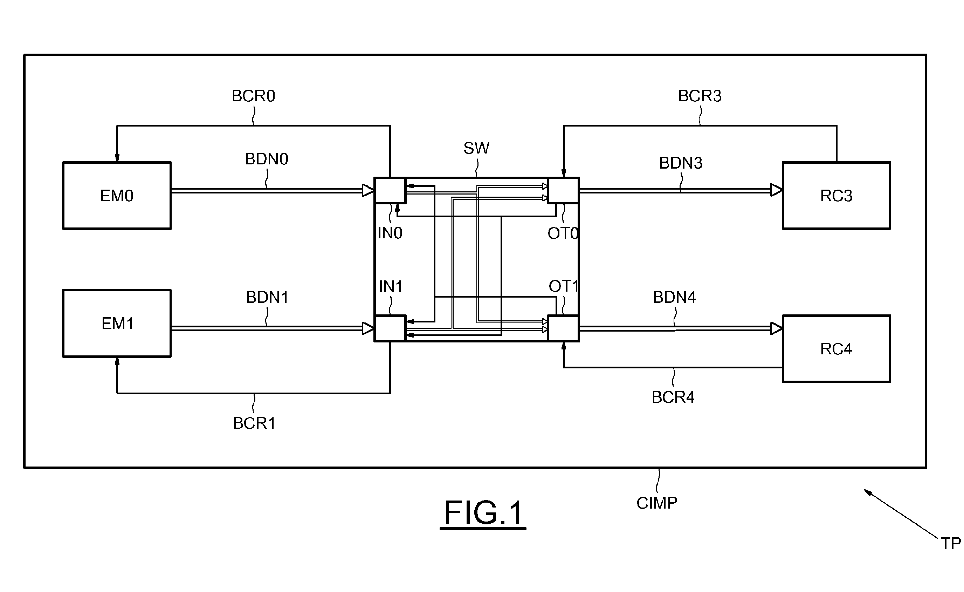

Sur la figure 1, la référence TP désigne un système de communication, par exemple un téléphone portable. Celui-ci comprend un circuit imprimé CIMP.

Sur ce circuit imprimé CIMP, sont par exemple disposés deux circuits intégrés jouant le rôle d'émetteurs EM0 et EM1. Ces derniers sont par exemples des circuits intégrés, tels que des processeurs liés chacun à une application donnée.

Le circuit imprimé CIMP comprend également deux autres circuits intégrés RC3 et RC4 jouant le rôle de récepteurs. Dans cet exemple, les circuits EM0 et EM1 émettent des données vers les circuits RC3 et RC4. Cependant, bien évidemment, les rôles des circuits intégrés pourraient être échangés. En outre, le circuit imprimé pourrait comprendre plus ou moins de circuits intégrés. L'exemple illustré sur la figure 1 n'est pas du tout limitatif.

Les émetteurs EM0 et les récepteurs RC3 et RC4 sont couplés à l'aide des liaisons de transfert de données BDN0, BDN1, BDN3 et BDN4. Ces liaisons de transfert de données sont reliés via un commutateur SW (« switch », en langue anglaise).

Le commutateur SW comprend ici deux entrées IN0 et IN1 respectivement associées aux émetteurs EM0 et EM1. Plus précisément, le récepteur EM0 est relié à l'entrée IN0 via la liaison de transfert de données BDN0 et l'émetteur EM1 est relié à l'entrée IN1 via la liaison de transfert de données BDN1.

Le commutateur SW comprend également deux sorties OTO et OT1 respectivement couplées aux récepteurs RC3 et RC4 via les liaisons de transfert de données BDN3 et BDN4.

Chaque entrée et chaque sortie est associée à un espace mémoire (par exemple de type FIFO, « First In First Out », en langue anglaise). Cet espace mémoire n'est pas représenté sur la figure 1 à des fins de simplification. Pour les entrées, l'espace mémoire associé permet de stocker les données envoyées par les émetteurs auxquels elles sont respectivement couplées. Pour les sorties, cet espace mémoire permet de stocker les données à envoyer aux récepteurs auxquels elles sont respectivement couplées. Cet espace mémoire peut être une portion d'une mémoire globale associée au commutateur ou au téléphone portable TP.

Les émetteurs EM0 et EM1 émettent des données vers les entrées du commutateur IN0 et IN1 via les liaisons de transfert de données BDN0 et BDN1.

Le commutateur SW répartit les données en fonction de leur catégorie, vers l'une ou l'autre de ses sorties OTO et OT1 pour les transférer vers les récepteurs adéquats RC3 ou RC4.

Comme mentionné précédemment, la transmission de données entre des émetteurs et des récepteurs est effectuée selon la technique de contrôle par crédit.

Pour autoriser les circuits EM0 et EM1 à leur transférer des données, les entrées IN0 et IN1 leur envoient un certain nombre de crédits (autrement dit une quantité de données que les circuits EM0 et EM1 sont autorisés à leur envoyer) via les bus BCR0 et BCR1.

De même, les récepteurs RC3 et RC4 envoient un certain nombre de crédits via les liaisons de transfert de données BCR3 et BCR4 aux sorties OTO et OT1 du commutateur SW.

Le commutateur est doté de tous les moyens matériels, voire logiciels lui permettant comme cela sera détaillé par la suite, d'élaborer les valeurs de crédit destinées aux circuits émetteurs à partir d'un coefficient de crédit disponible calculé à partir du crédit alloué par chaque récepteur au commutateur et d'un coefficient de pondération affecté à chaque trajet du commutateur.

Le principe du transfert de données via la technique de contrôle par crédit sera rappelé plus en détail ci-après.

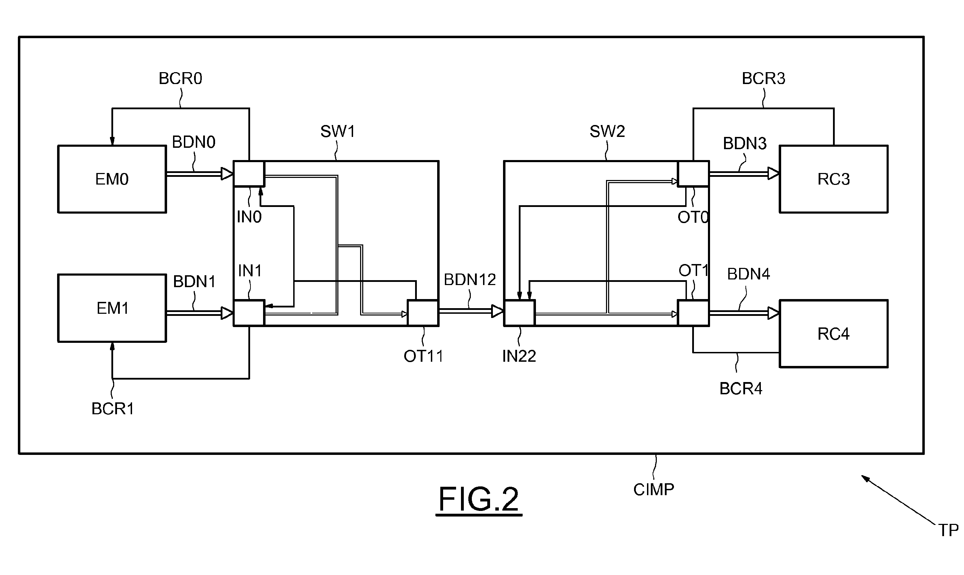

On se réfère maintenant à la figure 2 qui illustre un autre mode de réalisation d'un dispositif de transfert de données. Dans ce mode de réalisation, les circuits intégrés émetteurs d'une part EM0, EM1 et récepteurs d'autre part RC3, RC4 sont couplés via un premier et un deuxième commutateurs, respectivement SW1 et SW2.

Ces derniers sont reliés à l'aide d'une liaison de transfert de données BDN12 qui couple une sortie OT11 du premier commutateur SW1 à une entrée IN22 du deuxième commutateur SW2.

Le premier commutateur SW1 pourrait comprendre une autre sortie de façon à coupler les circuits EM0 et EM1 à d'autres circuits récepteurs. Cependant, à des fins de simplification, ces autres circuits récepteurs ne sont pas représentés sur le circuit imprimé CIMP.

Comme dans le mode de réalisation envisagé à la figure 1, des liaisons BCR0, BCR1, BCR2 et BRC3 sont en outre prévues pour mettre en oeuvre le transfert de données par contrôle de crédit.

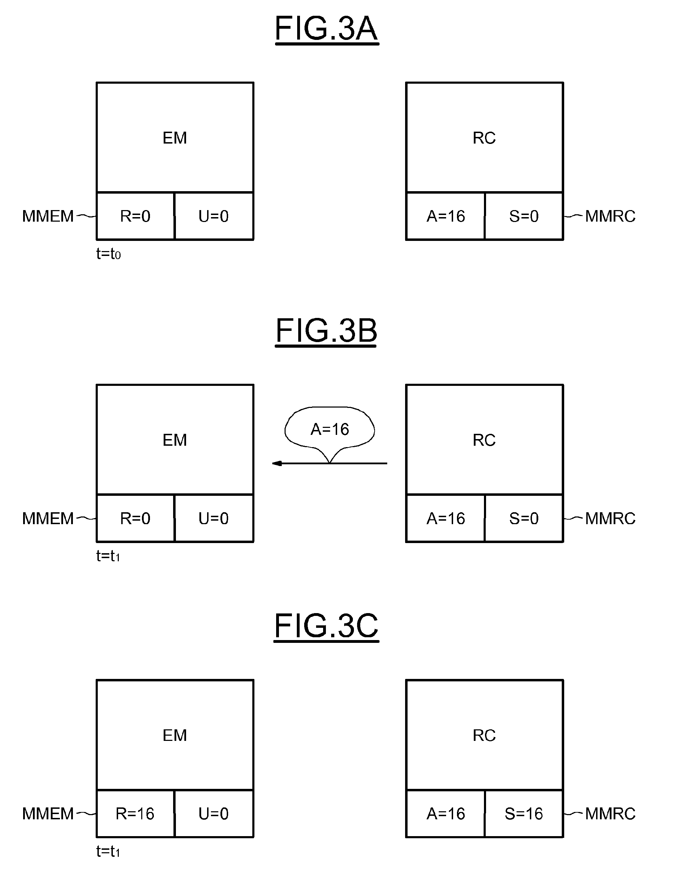

On se réfère à présent aux figures 3A à 3E qui illustrent la technique de transfert de données selon la technique de contrôle par crédit précitée.

Sur la figure 3A sont représentés à titre d'exemple un circuit intégré émetteur EM et un circuit intégré récepteur RC. On se place à l'instant $t_0$.

Le circuit intégré émetteur EM comporte des moyens de mémorisation MMEM aptes dans cet exemple à mémoriser deux variables respectivement R et U. La variable R représente les crédits qui ont été alloués par le récepteur RC à l'émetteur EM. En d'autres termes, le circuit émetteur EM est autorisé à transmettre au récepteur RC une quantité de données correspondant à R crédits. Par exemple, chaque crédit peut être équivalent à 32 octets de données.

A l'instant $t_0$, la variable R est égale à zéro, le circuit intégré émetteur EM n'étant alors pas encore autorisé à transmettre des données.

La variable U représente le nombre de crédits utilisés par le circuit intégré émetteur EM. Autrement dit, la variable U illustre la quantité de données déjà envoyées par le circuit émetteur EM au circuit récepteur RC, au vu de la quantité de données qu'il était autorisé à transmettre. Par conséquent, la valeur de la variable U est toujours inférieure ou égale à la valeur de la variable R.

Le circuit intégré récepteur RC comprend lui aussi des moyens de mémorisation MMRC. Ces derniers sont capables de mémoriser deux variables A et S.

La variable A est elle aussi une valeur de crédit. Elle correspond à la quantité de données que le circuit récepteur RC peut stocker dans l'espace mémoire auquel il est couplé comme précisé ci-avant.

La variable S correspond au nombre de crédits que le récepteur a envoyé à l'émetteur, c'est-à-dire le nombre de crédits que le récepteur RC autorise l'émetteur EM à lui envoyer. La valeur de la variable S est toujours inférieure à la valeur de la variable A. Et même, la valeur de la variable S peut être inférieure à la valeur de la variable A moins un seuil. Celui-ci peut être par exemple égal à deux octets. A des fins de simplification, on considérera que pour les figures 3A à 3E ce seuil est nul.

On se réfère à présent à la figure 3B. On se place à l'instant $t_1$. A cet instant, le récepteur RC alloue seize crédits à l'émetteur EM.

Par conséquent, comme illustré sur la figure 3C, la variable R de l'émetteur EM passe à la valeur de 16 crédits, ce qui signifie que l'émetteur EM est autorisé à envoyer un nombre d'octets correspondant à 16 crédits (512 octets dans le cas où un crédit correspond à 32 octets). De même, à l'instant $t_1$, la variable S du récepteur RC passe à 16 étant donné que celui-ci a autorisé le récepteur RC à envoyer 16 crédits.

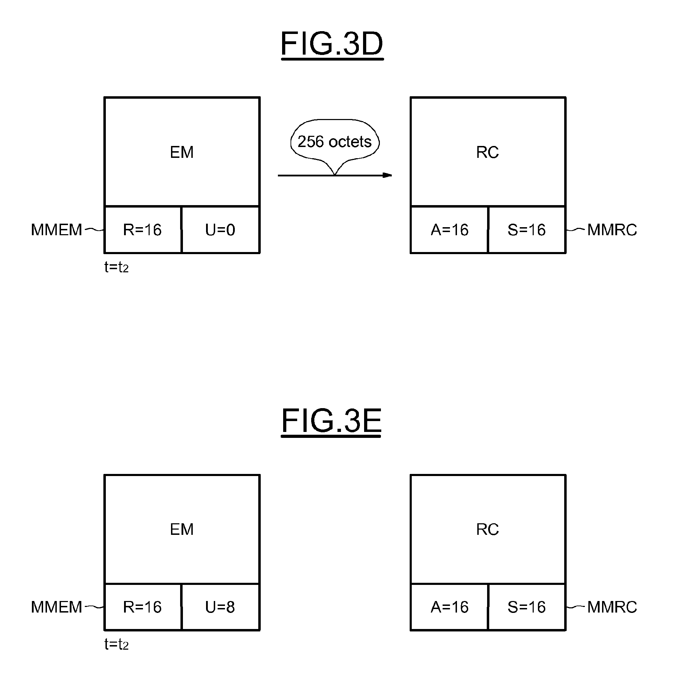

A l'instant $t_2$, représenté sur la figure 3D, l'émetteur EM envoie 256 octets (correspondant à 8 crédits) au récepteur RC. Par conséquent, comme on peut le voir sur la figure 3E, la variable U de l'émetteur EM prend la valeur 8. L'émetteur EM est peut donc encore autorisé à envoyer 256 octets de données correspondant à 8 crédits.

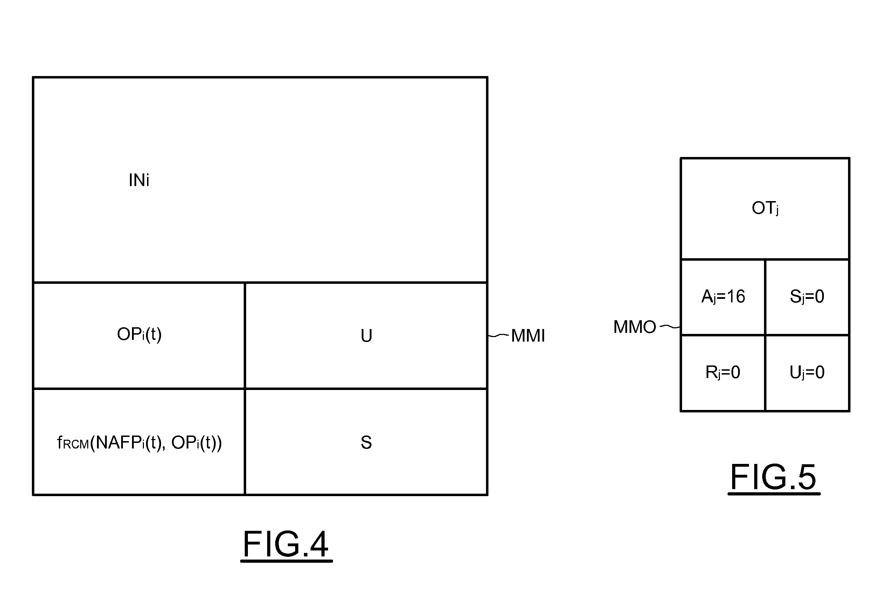

On se réfère à présent à la figure 4, qui illustre un port d'entrée INi d'un commutateur SW tel que représenté par exemple sur la figure 1. L'indice i est un entier correspondant au numéro du port d'entrée du commutateur. Comme il était précisé ci-avant, chaque port d'entrée INi jouer le rôle de récepteur du point de vue du circuit intégré émetteur EMi auquel il est couplé.

Le port d'entrée INi comporte des moyens de mémorisation MMI. Dans cet exemple, les moyens de mémorisation MMI sont capables de mémoriser plusieurs variables, dont une variable S, précédemment décrite, qui correspond au nombre de crédits que le port d'entrée a envoyé au circuit intégré émetteur auquel il est couplé, comme décrit précédemment en référence aux figures 3A et 3E, et dont la variable U (non utilisée dans cet exemple) qui correspond au crédit utilisé si le port d'entrée était utilisé comme port de sortie vers l'émetteur associé, et une variable R (non utilisée ici) qui est utilisée pour stocker le nombre de crédits reçus si, de même, le port d'entrée était utilisé comme port de sortie vers l'émetteur associé.

Par ailleurs, le commutateur SW comporte des moyens de calcul d'un coefficient de crédit $OP_i(t)$, à partir des crédits alloués par chaque récepteur RC3, RC4 au commutateur SW et du coefficient de pondération de chaque trajet susceptible d'être utilisé au sein de ce commutateur.

Ce coefficient de crédit est également stocké dans les moyens de mémorisation MMI.

Le commutateur SW comporte encore des moyens de calcul aptes à calculer une valeur de crédit A à partir du coefficient de crédit $OP_i(i)$ calculé et de la quantité de mémoire disponible dans le commutateur, comme cela sera décrit en détail par la suite.

Cette valeur de crédit est également stockée dans les moyens de mémorisation MMI.

On notera toutefois que la valeur de crédit A, qui est fonction de la variable $OP_i(t)$ et de la quantité de mémoire disponible dans l'espace mémoire couplé au port d'entrée INI, est calculée modulo un seuil.

En effet, il est préférable de laisser une quantité de mémoire disponible minimale au niveau de la mémoire couplée au port d'entrée INi de façon à éviter tout risque de congestion de données. La fonction permettant de générer la deuxième variable est appelée $f_{RCM}$. Autrement dit la deuxième variable correspond à : $f_{RCM}(NAFP_i(t), OP_i(t))$. Elle correspond par exemple au minimum entre les deux variables $NAFP_i(t)$ et $OP_i(t)$.

On se réfère à présent à la figure 5, qui illustre un port de sortie $OT_j$, j étant le numéro du port de sortie par rapport à son rang dans le commutateur. Le port de sortie $OT_j$ comporte des moyens de mémorisation MMO. Dans cet exemple, ces moyens de mémorisation MMO sont capables de stocker quatre variables différentes : $A_j$, $S_j$, $R_j$ et $U_j$.

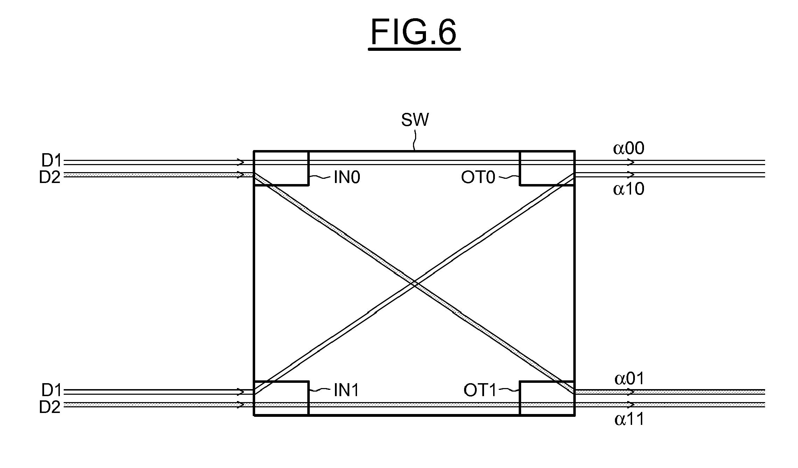

Il va maintenant être décrit la façon particulière dont est élaborée la variable $OP_i(t)$. Pour cela, on se réfère à la figure 6 qui illustre les flux de données au sein d'un commutateur SW. Le port d'entrée IN0 reçoit en entrée des données en provenance d'un circuit intégré émetteur auquel elle est couplée. Dans cet exemple, elle reçoit deux types de données D1 (flèche blanche) et D2 (flèche grise). Par exemple, les données D1 peuvent être de type audio, et les données D2 de type vidéo. De même, la borne d'entrée IN1 reçoit du circuit intégré émetteur auquel elle est couplée, deux types de données D1 et D2.

Ces données sont respectivement envoyées depuis les ports d'entrée IN0 et IN1 vers les ports de sortie : OTO pour les données D1, et OT1 pour les données D2.

On peut dénombrer quatre chemins différents selon les couples entrée/sortie empruntés par les données entrantes et sortantes. Le premier chemin est délimité par les ports INO/OTO, le deuxième chemin par les ports IN0/OT1, le troisième chemin par les ports IN1/OT0 et le quatrième chemin par les ports IN1/OT1. Les flux de données via ces quatre chemins sont caractérisés par un coefficient de pondération, respectivement $\alpha 00(t)$, $\alpha 01(t)$, $\alpha 10(t)$ et $\alpha 11(t)$, qui définissent un poids pour chaque chemin.

Le coefficient de crédit $OP_i(t)$ est alors élaborée selon l'expression suivante :

$$OP_i(t) = \sum_{j=1}^{n} \gamma_{ij}(t)\Delta_j(t)$$

où :

$$\Delta_j(t) = R_j(t) - U_j(t)$$

Dans les équations précédentes,

- l'indice i est un entier au rang du port d'entrée considérée au sein du commutateur ;
- l'indice j est un entier qui correspond au rang du port de sortie considérée au sein du commutateur ;
- les paramètres $R_j$ et $U_j$ sont les variables mémorisées par les moyens de mémorisation du port de sortie de rang j ;
- le paramètre t représente le temps ;
- le paramètre $\gamma_{ij}(t)$ est égal à $1/\alpha_{ij}(t)$, si $\alpha_{ij}(t) \neq 0$, sinon $\gamma_{ij}(t)$ est nul, $\alpha_{ij}(t)$ étant le coefficient de pondération correspondant au chemin délimité par la borne d'entrée INi et le port de sortie OTj.

Par exemple, si on considère les flux de données sur la figure 6, on obtient, pour le port d'entrée IN0 :

$$OP_0(t) = \frac{R_o(t) - U_o(t)}{\alpha_{00}(t)} + \frac{R_1(t) - U_1(t)}{\alpha_{01}(t)}$$

et pour la borne d'entrée IN1 :

$$OP_1(t) = \frac{R_o(t) - U_o(t)}{\alpha_{10}(t)} + \frac{R_1(A) - U_1(t)}{\alpha_{11}(t)}$$

A partir des coefficients de crédit $OP_0(t)$ et $OP_1(T)$ calculés pour les ports d'entrée INIO et INI1 respectivement le commutateur, ou le cas échéant, les commutateurs, calculent une valeur de crédit pour les circuits émetteurs EM0 et EM1.

Ce calcul est effectué à partir de ces coefficients de crédit, et de la valeur NAFP$_i$ représentative de l'espace mémoire disponible dans le commutateur SW.

Ainsi, la valeur de crédit A est donnée par la relation suivante :

$$A = f_{REN}(OP_i(t) \ ; \ NAFP_i(E))$$

Par exemple, comme indiqué précédemment, pour calculer la valeur de crédit, on choisit la valeur minimale entre les valeurs OP et NAFP$_i$.

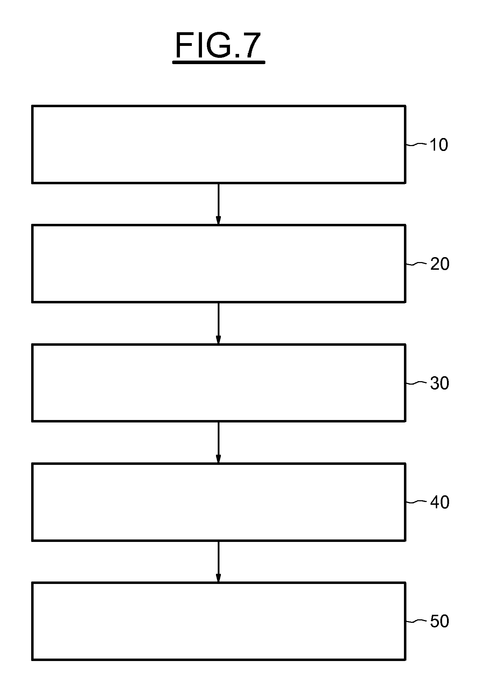

On se réfère à présent à la figure 7 qui illustre la procédure de transfert des données entre un circuit émetteur et un circuit récepteur, par l'intermédiaire d'un commutateur, ou de plusieurs commutateurs comme décrits précédemment.

Au cours d'une première étape 10, le commutateur récupère des valeurs de crédit en provenance des circuits récepteurs RC3, RC4.

Successivement, ou simultanément, il est procédé à l'élaboration d'un coefficient de pondération $\alpha_{ij}$ pour chaque chemin susceptible d'être emprunté dans le commutateur (étape 20).

A partir de ces valeurs, comme indiqué précédemment, le commutateur procède au calcul des coefficients de crédit OP$_0$(t) et OP$_1$(t) pour chaque port d'entrée IN0 et IN1.

Lors de l'étape 40 suivante, le commutateur récupère la quantité de mémoire disponible dans le commutateur.

Il procède alors au calcul de la valeur de crédit A, comme décrit précédemment.

La valeur de crédit peut alors être transmise au circuit émetteur pour mettre en oeuvre le transfert de données par contrôle de crédit en utilisant la valeur de crédit ainsi calculée (étape 50).

Il peut alors être procédé au transfert des données du premier ensemble de données vers le commutateur, puis vers les récepteurs en utilisant, d'une part, le coefficient de crédit calculé par le commutateur SW et transmis au circuit émetteur et, d'autre part, le crédit alloué par les circuits récepteurs au commutateur SW.

**Revendications**

1.  Procédé de transfert de données entre un premier (EM1, EM2) et un deuxième (RC3, RC4) ensemble d'éléments par l'intermédiaire de moyens de commutation (SW) comprenant un ensemble de trajets associés chacun à un coefficient de pondération ($\alpha_{ij}$(t)) représentant un flux de données pour chaque trajet, le procédé comprenant un contrôle de flux par crédit entre le premier ensemble d'éléments et les moyens de commutation et un contrôle de flux par crédit entre les moyens de commutation et le deuxième ensemble d'éléments, **caractérisé en ce que** l'on élabore un coefficient de crédit (OPi(t)) disponible pour chaque élément du premier ensemble à partir d'un crédit alloué par chaque élément du deuxième ensemble et du coefficient de pondération de chaque trajet.

2.  Procédé selon la revendication 1, **caractérisé en ce que** l'on calcule en outre une valeur de crédit (A (t)) pour chaque élément du premier ensemble, indiquant la quantité de données que les moyens de commutation sont autorisés à recevoir du premier élément, ladite valeur de crédit étant calculée à partir du coefficient de crédit élaboré et d'une valeur représentative d'une quantité d'espace mémoire disponible dans les moyens de commutation pour recevoir des données en provenance de chaque élément du premier ensemble d'élément.

3.  Procédé selon la revendication 2, **caractérisé en ce que** la valeur de crédit est calculée en calculant la valeur minimale entre le coefficient de crédit et ladite valeur représentative de l'espace mémoire disponible.

4.  Procédé selon l'une des revendications 2 et 3, **caractérisé en ce que** l'on transmet la valeur de crédit calculée à chaque élément du premier ensemble, et **en ce que** le transfert des données entre chaque élément du premier ensemble et les moyens de commutation est effectué en fonction de la valeur de crédit calculée.

5.  Procédé selon l'une quelconque des revendications 1 à 4, **caractérisé en ce que** l'on transmet les données dans les trajet des moyens de commutation en fonction de la nature des données.

6.  Dispositif de transfert de données entre un premier (EM1, EM2) et un deuxième ensemble (RC3, RC4) d'éléments comprenant des moyens de commutation (SW) comprenant un ensemble de trajets associés chacun à un coefficient de pondération ($\alpha_{ij}$(t)) représentant un flux de données pour chaque trajet et comportant des entrées (INi) et des sorties (OTj), respectivement associées à des éléments du premier et du deuxième ensemble, **caractérisé en ce que** les moyens de commutation comprennent des moyens pour calculer un coefficient de crédit (OPi (t)) disponible pour chaque élément du premier ensemble à partir d'un crédit (R(t)) alloué par chaque élément du deuxième ensemble et du coefficient de pondération de chaque trajet et pour transmettre les données à partir de la valeur du coefficient de crédit calculé.

7.  Dispositif selon la revendication 6, **caractérisé en**

**ce qu'**il comprend en outre des moyens pour calculer une valeur de crédit (A(t)) pour chaque élément du premier ensemble, indiquant la quantité de données que les moyens de commutation sont autorisés à recevoir du premier élément, ladite valeur de crédit étant calculée à partir du coefficient de crédit élaboré et d'une valeur représentative d'une quantité d'espace mémoire disponible dans les moyens de commutation pour recevoir des données en provenance de chaque élément du premier ensemble d'élément.

8.  Dispositif selon la revendication 7, **caractérisé en ce qu'**il comprend en outre des moyens de calcul aptes à calculer la valeur de crédit à partir de la valeur minimale entre le coefficient de crédit et ladite valeur représentative de l'espace mémoire disponible.

9.  Dispositif selon l'une quelconque des revendications 6 à 8, dans lequel ledit coefficient de crédit disponible pour une entrée numérotée i, i étant un entier, est égal à :

$$OP_i(t) = \sum_{j=1}^{n} \gamma_{ij} \Delta_j(t),$$

avec $\gamma_{ij}(t)=1/\alpha_{ij}(t)$ si $\alpha_{ij}(t) \neq 0$ ou $\gamma_{ij}(t)=0$ sinon, $\alpha_{ij}(t)$ étant le coefficient de flux pour le couple entrée/sortie respectivement numérotée i et j, j étant un entier compris entre 1 et n, et où :

- $OP_i(t)$ est le paramètre de répartition pour l'entrée numérotée i,
- n est le nombre de sorties du moyen de répartition, et
- $\Delta_j(t)$ est la quantité de données qu'il est possible de transférer depuis la sortie numérotée j.

10. Système de télécommunication, incorporant un dispositif selon l'une des revendications 6 à 9.

FIG.1

## FIG.2

EP 2 085 891 A1

# FIG.3A

EM

MMEM ~ | R=0 | U=0

RC

| A=16 | S=0 | ~ MMRC

t=t0

# FIG.3B

EM

A=16

RC

MMEM ~ | R=0 | U=0

| A=16 | S=0 | ~ MMRC

t=t1

# FIG.3C

EM

RC

MMEM ~ | R=16 | U=0

| A=16 | S=16 | ~ MMRC

t=t1

# FIG.3D

EM

256 octets →

RC

MMEM — | R=16 | U=0 |

| A=16 | S=16 | — MMRC

t=t₂

# FIG.3E

EM

RC

MMEM — | R=16 | U=8 |

| A=16 | S=16 | — MMRC

t=t₂

FIG.5

FIG.4

# FIG.6

EP 2 085 891 A1

# FIG.7

Europäisches
Patentamt

European
Patent Office

Office européen
des brevets

# RAPPORT DE RECHERCHE EUROPEENNE

Numéro de la demande

EP 09 15 1757

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 98/25378 A (FUJITSU NETWORK COMMUNICATIONS [US]; FUJITSU LTD [JP]) 11 juin 1998 (1998-06-11) * page 10; revendication 1 * ----- | 1-10 | INV. G06F13/42 G06F15/173 H04L12/56 |
| A | KUNG H T ET AL: "RECEIVER-ORIENTED ADAPTIVE BUFFER ALLOCATION IN CREDIT-BASED FLOW CONTROL FOR ATM NETWORKS" PROCEEDINGS OF INFOCOM '95 - CONFERENCE ON COMPUTER COMMUNICATIONS. FOURTEENTH ANNUAL JOINT CONFERENCE OF THE IEEE COMPUTER AND COMMUNICATIONS SOCIETIES, BOSTON APR. 2 - 6, 1995; [PROCEEDINGS OF INFOCOM], LOS ALAMITOS, IEEE COMP. SOC. PRESS, US, vol. 3, 2 avril 1995 (1995-04-02), pages 239-252, XP000580585 ISBN: 978-0-7803-2524-1 * alinéa [6.RECEIVER.ORIENTED.ADAPTIVE.SCHEME]; figure 4 * ----- | 1-10 | |
| A | US 2007/194807 A1 (REBLEWSKI FREDERIC [FR] ET AL) 23 août 2007 (2007-08-23) * alinéas [0033], [0034] * ----- | 1-10 | DOMAINES TECHNIQUES RECHERCHES (IPC) G06F H04L |
| A | EP 1 641 197 A (COMMISSARIAT ENERGIE ATOMIQUE [FR]) 29 mars 2006 (2006-03-29) * alinéas [0064], [0069], [0072], [0088] * ----- | 1-10 | |

Le présent rapport a été établi pour toutes les revendications

| Lieu de la recherche | Date d'achèvement de la recherche | Examinateur |
|---|---|---|
| Munich | 4 juin 2009 | Lefebvre, Laurent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 2 085 891 A1**

**ANNEXE AU RAPPORT DE RECHERCHE EUROPEENNE
RELATIF A LA DEMANDE DE BREVET EUROPEEN NO.**  EP 09 15 1757

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-06-2009

| Document brevet cité au rapport de recherche | | Date de publication | Membre(s) de la famille de brevet(s) | | Date de publication |
|---|---|---|---|---|---|
| WO 9825378 | A | 11-06-1998 | EP | 0894380 A1 | 03-02-1999 |
| | | | JP | 2001500338 T | 09-01-2001 |
| US 2007194807 | A1 | 23-08-2007 | WO | 2007115600 A1 | 18-10-2007 |
| EP 1641197 | A | 29-03-2006 | FR | 2875982 A1 | 31-03-2006 |
| | | | JP | 2006101525 A | 13-04-2006 |
| | | | US | 2006067218 A1 | 30-03-2006 |

EPO FORM P0460